# EUROPEAN PATENT APPLICATION

(11) **EP 2 317 431 A1**
(43) Date of publication of application: **04.05.2011**
(21) Application number: 09174712.1
(22) Date of filing: 30.10.2009
(51) Int. Cl.: G06F 9/44

(54) **System and method for adapting software architecture**

(71) Applicant: IBBT vzw, 9050 Ledeberg (BE); Universiteit Antwerpen, 2000 Antwerpen (BE)
(72) Inventor: De Florio, Vincenzo, 3020, Herent (BE); Gui, Ning, 3001, Heverlee (BE)
(74) Representative: BiiP cvba

(57) **Abstract**

The present invention is related to a method for determining during run-time an adaptation to a software architecture comprising a plurality of components. The method comprises the steps of
- evaluating constraints for the adaptation relating to a functional dependence of components of the software architecture,
- determining during run-time a context for the software architecture taking into account information on the state of the architecture,
- selecting among a plurality of context models a context model corresponding to the determined context,
- evaluating constraints for the adaptation imposed by the selected context model,
- taking a decision on performing the adaptation based on the outcome of the evaluation steps.

## Description

### Field of the Invention

The present invention generally relates to the field of adaptive architecture-based software systems.

### Background of the Invention

Software systems today increasingly operate in changing environments and with diverse user needs, resulting in the continuously increasing complexity for managing and adapting these systems. As a consequence, software systems are increasingly expected to dynamically self-adapt in order to accommodate resource variability, changing user needs and system faults. However, mechanisms that support self-adaptation currently are hardwired within each application. These approaches are often highly application-specific, static in nature and tightly bound to the code. Being static, such mechanisms can hardly cope with dynamic context changes. Furthermore, the localized treatments of application adaptation could not effectively deal with complex environments in which many multi-influencing applications coexist.

In order to deal with the adaptation problem outside the single application scope, architecture-based adaptation frameworks have been proposed to handle the cross system adaptation. Reference is made to the papers "An architecture-based approach to self-adaptive software", (Oreiz, et al., IEEE Intelligent Systems & Their Applications, 1999. 14(3): p. 54-62) and "Rainbow: Architecture-based self-adaptation with reusable infrastructure" (Garlan et al., Computer, 2004. 37(10): p. 46-+). Rather than scattering the adaptation logics in different applications and representing them as low-level binary code, architecture-based adaptation uses external models and mechanisms in a closed-loop control fashion to achieve various goals by monitoring and adapting system behaviour across application domains. So, in architecture-based adaptation systems the adaptation is performed outside the application. A well-accepted design principle in architecture-based management consists in using a component-based technology to develop management system and application structure.

However, in traditional approaches, design-time knowledge for the application structure is largely lost during the off-line application construction process. Without this knowledge, it is nearly impossible for external engines to effectively change an application structure with the assurance that the new configuration would perform as intended.

Architecture-based adaptation is proposed to deal with cross system adaptation. In principle, such external control mechanisms provide a more effective engineering solution with respect to internal mechanisms for self-adaptation because they abstract the concerns of problem detection and resolution into separable system modules. However, current architecture-based adaptation frameworks concentrate on the architecture and provide at most a limited support to an application-specific design goal.

Consequently, there is a need for architecture-based management systems wherein a more systematic support for multi-context knowledge integration is provided.

In US2008/229278 a system for software radio manipulation is disclosed. The proposed solution is based on a component-oriented architecture, so different components are statically referenced. Consequently, the system cannot easily change certain function modules. Only predefined context is applied. Run-time adaptation is not provided.

Patent US7269650B2 focuses on context information management and configuration. It studies how to establishing an interconnection between context attribute and context source.

Patent US6442620B1 proposes an object model where the lifecycle, properties and references of objects are controllable and modifiable through context policies and activators. This allows automatically enforcing and/or adapting object states and object references when context changes are detected.

### Aims of the invention

The present invention aims to provide an architecture-based adaptation system and method wherein multiple context-specific knowledge is integrated, so that it can be incorporated in a software composition and adaptation process. In this way run-time component composition is better supported for changing environments.

### Summary

The present invention relates in a first aspect to a method for determining during run-time an adaptation to a software architecture comprising a plurality of components. The method comprises the steps of
- evaluating constraints for the adaptation relating to a functional dependence of components of the software architecture,
- determining during run-time a context for the software architecture taking into account information on the state of the architecture,
- selecting among a plurality of context models a context model corresponding to the determined context,
- evaluating constraints for the adaptation imposed by the selected context model, and
- taking a decision on performing the adaptation based on the outcome of the evaluation steps.

This method indeed achieves the goal of integrating context-specific knowledge. Information on the actual context is received during run-time and from this a suitable context-model is determined. This context-model is selected among a plurality of possible context models. The context model is a context-specific architecture model wherein the context knowledge is applied to build rules or algorithms for an adapted context-specific software architecture configuration. The context model also comprises actions and algorithms for implementing an adapted configuration. This leads to further constraints for the adaptation strategy that have to be assessed. On the other hand, also design-time information is reconsidered during run-time, as functional dependence constraints are checked to detect any violation before it is decided to carry out an adaptation. Hence, in the adaptation decision taken the result of evaluating the various constraints is reflected.

In a most preferred embodiment the method comprises the further step of carrying out the decided adaptation.

Optionally, the method comprises the step of evaluating non-functional constraints for the adaptation. This allows taking an adaptation decision which is even more pointed towards to the specific circumstances wherein the software architecture is currently operating.

In a typical embodiment the context for the software architecture comprises information related to user preferences, to the surrounding environment wherein one is operating or it may deal with the application itself. Of course, combinations of various kinds of information are possible too.

In a second aspect the invention relates to a system for adapting a software architecture during run-time, whereby the software architecture comprises a plurality of components. The system comprises
- means for evaluating constraints for an adaptation to the software architecture relating to a functional dependence of components of the software architecture,
- means for determining during run-time a context for the software architecture taking into account information on the state of the architecture and for selecting among a plurality of context models a context model corresponding to the determined context, whereby the means further are arranged for evaluating constraints for the adaptation imposed by the selected context model,
- decision means for deciding on performing the adaptation based on information provided by the means for evaluating and said means for determining.

The proposed system is capable of dealing both with functional design constraints and with constraints arising from contextual knowledge. One module is arranged for detecting functional dependence violations and another module deals with context issues. It determines the actual context and queries a suitable context model. Constraints for the adaptation are then evaluated.

In an embodiment of the invention the means for dealing with context issues comprises a first submodule arranged for determining during run-time a context for the software architecture taking into account information on the state of the architecture and for selecting among a plurality of context models a context model corresponding to the determined context and a second submodule for arranged for evaluating constraints for the adaptation imposed by the selected context model.

In a preferred embodiment of the invention the decision means and the means for evaluating the functional dependence constraints are integrated.

Preferably, the system also comprises a means for carrying out the modifications to the architecture during run-time.

In one embodiment the system comprises a means for receiving the information on the state of the architecture to be adapted.

In an advantageous embodiment the system comprises a management interface capable of managing components of the software architecture and arranged for communication with the means for receiving the information on the state and/or the means for carrying out the modifications.

Optionally, storage means can be provided in the system, for example for storing constraints. Also decisions are advantageously stored in storage means.

In a preferred embodiment the means for evaluating constraints relating to a functional dependence are arranged for performing a reference update of the software architecture.

### Brief Description of the Drawings

Fig.1 represents a context-specific application construction flow according to the present invention.

Fig.2 represents an application wherein the present invention is applied.

Fig.3 represents an embodiment of the system according to the invention.

Fig.4 represents context-specific adaptation in the example scenario shown in Fig.2.

### Detailed Description of the Invention

The present invention basically capitalizes on the observation that in order to achieve an effective architecture-based adaptation system, three important prerequisites must be fulfilled. First, when building an application, the practices of rigid location and binding between component instances should be replaced with run-time, context-specific composition. Second, design-time information must be exposed and those constraints must be made explicitly verifiable during run-time. Design-time information can relate to the functional behaviour of components, possible non-functional constraints of components, the interfaces required for proper operation, the input/output ports etc... Third, since different contexts have radically different properties of interest and require dynamic modification strategies, an important requirement is that the architectural control model and modification strategies can be easily tailored to various system contexts.

The present invention tackles these problems from different perspectives. A run-time application construction methodology is proposed to provide a continuum between the design-time and run-time process. An architecture-based management framework structure is designed to facilitate the integration of context-specific adaptation knowledge. In order to support run-time component composition, in one embodiment a declarative component model with uniform management interface and meta-data based reflection is proposed. By adopting a service oriented architecture-based implementation, the framework structure of the invention provides efficient mechanisms for adapting to changing context requirements. The proposed implementation is very sound in terms of line of code, memory and adaptation capabilities.

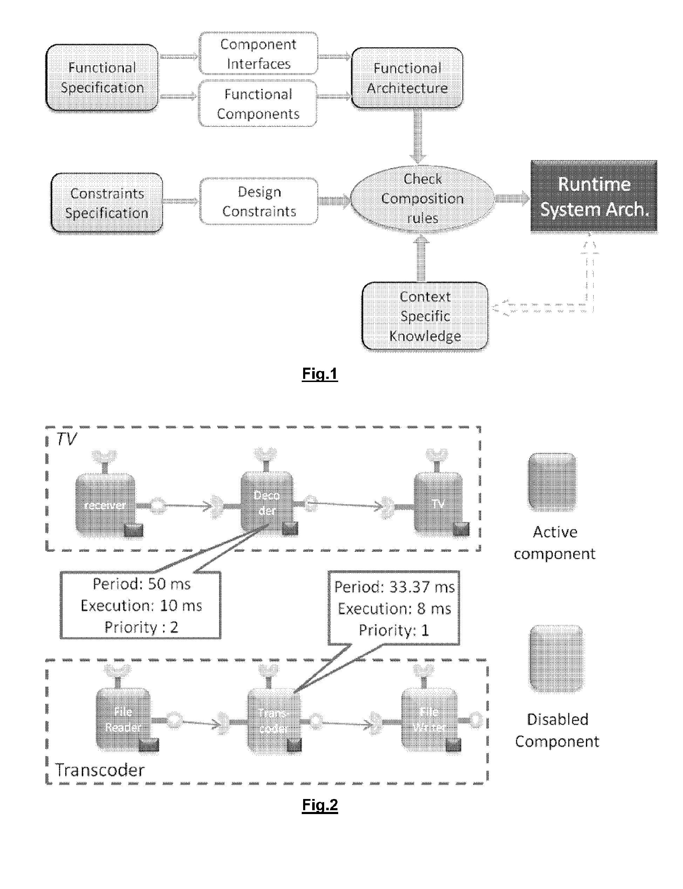

In order to deal more effectively with run-time component composition, a new method is proposed to explicitly incorporate context-specific knowledge into the composition & adaptation process of a software application. The proposed architecture design & composition flow, depicted in Fig.1, represents a procedure which incorporates the functional design information with context concerns in composing run-time software architecture. Depending on the employed design languages and corresponding tools, the compliance with the functional interface is enforced during the design process. However, unlike the prior art approach, in which a component's design time knowledge is lost during this compiling process, in this invention the design time information is explicitly exposed and maintained.

As an application is constructed during run-time, in order to achieve correct and pointed adaptation, a set of constraints must be met. In this process at least two types of constraints are evaluated :
- The functional dependence constraints must be satisfied.
- Context-specific knowledge, which specifies the domain related information and adaptation strategy, should also hold valid after adaptation process. Advantageously, also a component's non-functional constraints can be guaranteed: this information includes, for instance, requirements for CPU speed, screen size or that some property value be within a certain range.

Context information can be seen as information characterizing a situation related to the interaction between humans, applications and the surrounding environment. Some examples are now provided.
- Context information can relate to a user's preference. When watching mobile TV on his mobile phone, some users may prefer better quality, which will substantially reduce battery life, while others may prefer normal (low) quality to save battery.
- Context information may be related to the surrounding environment. For instance, the network connection will vary greatly with the connection type and the user location. So, choosing the best connections need context knowledge support.
- As another example, the context information may have to do with the applications. When several applications coexist, they might compete for the system resources. If the system wants to perform an effective adaptation, it needs to know how many applications exist and which their running requirements are. This information is context information and can only be retrieved during run-time.

As the dashed arrow in Fig.1 points out, a managed application is continuously restructured and evolves according to context switches. The combined knowledge of functional dependencies and environmental context enables automatic run-time verification of constraints from various aspects. This allows the system to change the software structure according to its hosting environment without violating constraints arising from these aspects.

In order to illustrate some of the complexities involved in introducing context knowledge into the application composition process, an example scenario is now presented that will be revisited later in this detailed description.

Today people are surrounded by an ever increasing amount of networked equipment which can be harnessed to do something for them for temporary base or on the long-term base. The open-system approach implies that a set of new applications is installed into the host devices without thorough system analysis.

As an example, consider a set-top device with open platform support. The basic application of such device is TV signal processing. In brief, this application receives streaming video data from a remote server, decodes this data and outputs it to the TV port. As an open system, a set-top box can also install certain applications to enhance its usability. For example, a user can install a new application, which transcodes recorded High Definition TV stream into an IPhone format for later display on his/her mobile devices. Fig. 2 shows the simplified component graph for those two applications. As a typical multi-task system, if a user starts the two applications, a set-top box tries to execute the two applications simultaneously no matter whether the set-top device has enough resources or not. If that is not the case, this may possibly lead to transient timing problems of the TV decoding task including missing frames, data overflows etc. These kinds of time breaches can result in poor video quality and bad user experience.

Context-specific knowledge, however, can help the architecture to automatically determine which actions should be taken according to the current context. One possible strategy can choose to disable the computationally intensive transcoding component and reserve enough system resources for TV application. This is because a user normally prefers to give highest priority to those applications that influence the experience most. Fig.2 shows the snapshot of component states after such adaptation. A practical example would be as follows. John decides to watch the TV. Default context in this case is *"maximize QoE by maximizing TV experience".* The system then makes use of all the available resources to achieve the highest A/V quality. At some point in time John notices that an episode of his favorite series is about to begin, so he starts the capture+encoding service concurrently with the default A/V rendering. Context is now *"maximize QoE by maximizing capture quality",* as John rather prefers to have a perfect quality recording than to maximize his current TV experience. Consequently, the system allocates its resources so as to guarantee a perfect capture, possibly degrading the quality of the TV rendering service.

The architectural framework structure is now discussed. A standard view of software architecture is adopted that is typically used today at design time to characterize an application to be built. Specifically, an application is represented as a graph of interacting computational elements. Nodes in the graph, called components, represent the system's principal computational elements (software or hardware) and/or data stores. The connections represent the pathways for interaction between the components. Additionally, the component may be annotated with various properties, such as expected throughputs, latencies and protocols of interaction.

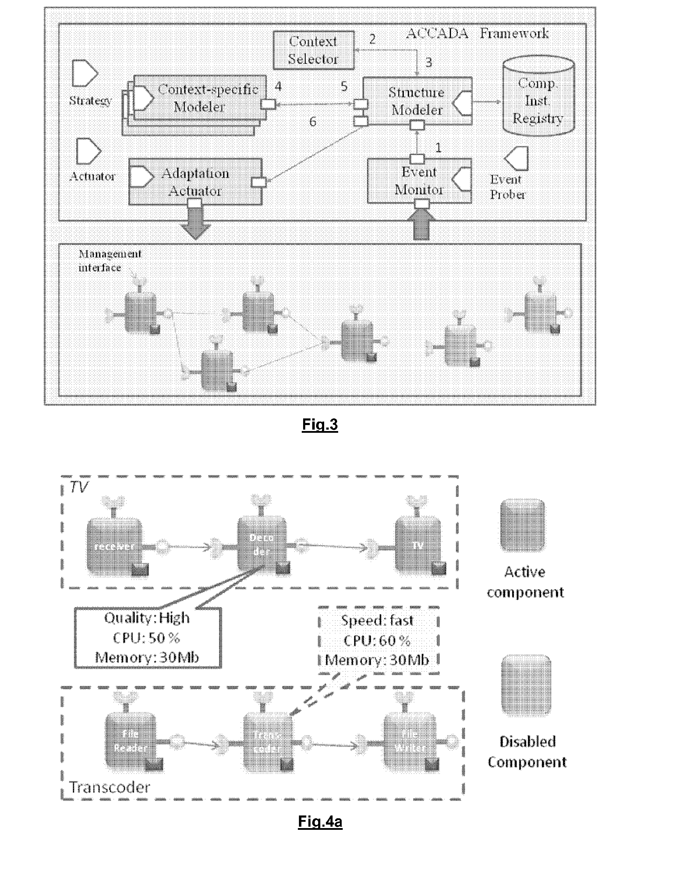

Fig.3 represents the architecture for adaptation according to an embodiment of the invention. The invention uses an abstract architectural model to monitor a running system's run-time properties, evaluate the model for (functional as well as context-specific) violation and - if a problem occurs - performs global and component-level adaptations on the running system. As illustrated in the figure, the proposed approach makes use of an extended control loop. The loop comprises two layers, namely a management layer and a modelling layer. In a preferred embodiment of the invention five basic functional modules are identified in said two layers: *Event Monitor, Adaptation Actuator, Structural Modeller, Context-Specific Modeller* and *Context Selector.* The Event Monitor and Adaptation Actuator provide an interface to manage the installed component instances and belong to the Management Layer. The other three modules constitute a Modelling Layer, which builds the system architectural model according to the changing context.

Basically, the functionality of the various blocks can be summarised as follows. The Event Monitor monitors the changes that may affect the system's correct operation. Then it invokes the service interface of the registered Structural Modeller, which triggers the adaptation process. The Structural Modeller is to detect any functional dependence violation and classifies installed components in terms of functional constraints into satisfied and unsatisfied components (for software-architecture maintenance). A context selector is then queried to get any best-fitting context model. Based on the functional satisfied component list, the context-specific modeller generates a set of adaptation actions for the selected context model. The Structure modeller merges all information into an adaptation plan, which is sent to an Adaptation Actuator for execution.

The Event Monitor module observes and measures various system states. The Event Monitor thus provides input to base the system's decisions on. It sends notifications to trigger a new round of the adaptation process. A possible source of adaptation may include, for example, a new component being installed or the CPU or memory utilization reaching a status that may have significant effect on the existing system configuration. It could also be a simple timer that triggers periodically at certain time intervals. The Adaptation Actuator carries out the actual system modification. It can be seen as the output channel for implementing the decisions taken. The actual action set is tightly related to the component implementation. In order to achieve effective architecture-based adaptation, the basic set of actions should preferably include component lifecycle control (starting, pausing, restarting, or terminating a component), attribute configuration (changing parameters of a component) and component reference manipulation (changing a component's references towards other components).

Building a software system architecture model is not a trivial endeavour ― it includes handling design-time knowledge such as interfaces or constraints as well as run-time aspects on environment changes. By using the divide and conquer principle, the management of these two aspects is assigned to different modules to more effectively deal with two distinct requirements, namely software architecture management and context-specific knowledge integration. These two modules are the structural modeller and the context-specific modeller, which are discussed more in detail below.

The Structural Modeller manages functional dependencies between installed components ― checking whether the required and provided interfaces are compatible ― and maintains the application's software architecture. This module is comparably stable as it is only determined by the component implementation model and does not change with context. So, it is designed as a core module of the system. In addition to the functional dependence management, the traces of the adaptation steps performed are also monitored and exposed for later analysis. Another core module is the Context-specific Modeller. In order to cope with dynamically changing environments, rather than going for the traditional approach of "one adaptor for all possible contexts", the proposed framework supports one or more *Context-specific Modellers.* In a preferred embodiment of the invention each modeller is specifically designed for a different context in the system. Alternatively, the information on various context models may be comprised in one modeller. By reasoning upon (measured or observed) various system metrics, the *Context Selector* is capable to determine the most appropriate context model. For instance, suppose that John is an elderly person that wears a Body Area Network (BAN) monitoring his conditions. When an alarm is raised by the BAN, the Context Selector may choose a context model maximizing John's safety at the cost of another parameter, e.g. cost-effectiveness.

In order to achieve more reusability and flexibility, the system of this invention can be designed according to the Service Oriented model. Each module is designed and implemented as a service provider. Modules implement and register their interfaces into the system service registry. Thanks to such loosely coupled structure, a candidate service provider can be easily interchanged during system run-time. In doing so, many existing and/or future more sophisticated context adaptation policies can be plugged into the framework.

In the approach according to the invention a component represents a single unit of functionality and deployment. One possible way to achieve architecture-based run-time composition is by applying a component model with uniform management architecture and component description and introspection.
As components are individually installed and configured by the system service, it is desirable that a component can be managed through a uniform management interface. With this interface components are reified in a uniform way for configuration, state monitoring and management. This approach enables system management services, such as performed by the *Event Monitor* and the *Adaptation Actuator,* to be designed in a generic way and applied across multiple application domains. The management interface supports lifecycle control and getting/setting component properties. It can be accessed via two different approaches ― either accessing directly or mediated through an architectural layer which, apart from performing the requested actions, also coherently updates the status of the global software architecture. In order to maintain a coherent and accurate global configuration, it is for security reasons important that this uniform management interface can only be accessed through architecture-exposed methods. The paper "A hybrid real-time real-time component model for reconfigurable embedded systems" (N. Gui et al, ACM symposium on Applied computing, 2008, Fortaleza, Ceara, Brazil*)* provides information on the detailed design of such a management interface. In order to support different types of components, a component model should be able to describe the component's distinguished stable characteristics. These features include a component's provided and required interfaces, component's properties as well as other constraints, for example, the type of CPU that is required. Interface-based introspective and reflective component models have already been proposed in prior art systems, wherein a general interface is designed for such knowledge discovery.
Instead of following these approaches, a concise management interface is used to control and capture the components' run-time state, while meta-data is applied to expose component-specific knowledge. Using a meta-data approach component functional constraints can be explicitly expressed and verified. Meta-data ("data about data") is data describing context, content or structure. For example, meta-data may describe the component functional contracts, such as provided interface and required interface; properties etc... At the same time other constraints can be also expressed in meta-data. Compared to the interface-based introspection, it provides designers with a more light-weighted (in terms of lines of code) and explicit solution. Compared to the interface-based approach, meta-data approach enables components to be identified prior to their initialization. Furthermore, this reduces the burden of component developers to implement those introspection interfaces, as meta-data already provides much design-time structural information. The meta-data can be naturally abstracted from application design, validated in the verification process, and then reused during the run-time composition process. In this approach a component design knowledge actually winds through its whole lifecycle. The system of the invention can dynamically discover and retrieve a component's structural characteristics as soon as they are installed into the system.

As already mentioned, modelling the whole system architecture and making pointed adaptation decisions is a very complex process. That is especially true in this invention, as not only functional dependencies but also the context knowledge are considered in the composition process. These two aspects are preferably kept logically separated and assigned to what in this text is referred to as a *Structural Modeller* and a *Context-specific Modeller,* described more in detail in what follows.

As the application is constructed, configured and reconstructed during system run-time, how to derive the functional and structural dependency among components becomes one of the key problems in run-time component composition. The Structural Modeller performs several processes, the most important of which are the dependence compatibility check and the maintenance of the application architecture.
In the dependence compatibility check the dependence relationships of the installed components are first checked. A component can only be initialized when all its required interfaces (also called receptacles) have corresponding interfaces provided. This also guarantees component initialization orders. In other component models different policies may be employed, such as the interface based matching or data communication matching. Such function is quite important for run-time composition as it provides a general matching service which is indispensable in maintaining application architecture during system configuration changes.
Regarding the maintenance of the application architecture (reference update) the following is to be noted. As a component is installed and uninstalled during run-time, the issue of reference update during component exchange must be addressed. When one component is exchanged for another it is necessary to update the references that point to the old component such that they refer to the new one. Doing so is necessary to ensure that the program continues to execute correctly. For example, when a component is disabled, the modeller firstly checks whether another component with the same functional attributes exists. If such a candidate is successfully found, the modeller repairs the references between components to change the old references with the new one and then destroys the invalid connections. Otherwise, all components which depend on this disabled component are also disabled. All these adaptations are performed during run-time without disabling the whole application. By having the system managing the run-time reference update, an application's architectural integrity can be preserved even when there are configuration changes. Many run-time composition approaches known in the art provide a similar layer to manage the references between components. However, without context information integration, this functional layer itself cannot solve conflicts when several functional configurations are available. Such kind of ambiguity can only be handled with context knowledge.

Whereas the *Structural Modeller* deals with the functional related constraints in building and maintaining the software architecture, the *Context-specific Modeller* deals with constraints related to the knowledge of context. All components that satisfy functional requirements are further also evaluated by context knowledge. As a result, the modeller builds a context-specific architecture model using its knowledge and adaptation strategy. This model is checked periodically and/or on request. If a constraints violation occurs, it determines the course of action and delegates such actions to the adaptations execution module.

In an embodiment of this invention several context-specific modellers with different context adaptation knowledge are installed simultaneously. They implement the same context-specific modeller service interface with different attributes describing their target concerns. Such concerns could be e.g. prolonging mission life in case of low batteries or maximizing user experience when watching movies on a given mobile device. Service orientation enables the architecture to support different or future unpremeditated adaptation strategies. Another benefit from this approach is that one modeller instance just needs to deal with a fraction of all possible adaptation concerns. Compared to "one size fits all" approach, the proposed solution makes the modeller very concise, easy to implement and consuming fewer resources. Selecting a (best-fitting) context model in this case boils down to selecting a context-specific modeller. By switching Context-specific Modeller, the system architecture model as well as the adaptation behaviour can be easily altered, which is beneficial in matching different environmental conditions. Here, the Context Selector determines which Context-specific Modeller is to be used.

As several Context Selectors may co-exist in a specific time, only one of them is selected according to current system context. It returns an active context-specific modeller "best matching" the current environment. According to different system requirements, the reasoning logic may be as simple as using CPU status as decision logics, or as complex as using a semantic reasoning engine or some other artificial intelligence approach. By separating three kinds of responsibilities - knowing when a modeller is useful, selecting among different modellers and using a modeller
- new modellers can be integrated into software system in a way that is transparent to users. One simple interface is designed to return the best matched reference:
   public interface ContextSelector
   { public ContextAdaptor findCurrentFitAdaptor(); }

The management layer provides an abstract interface to manage the interactions between modelling layer and component instances. It comprises an Event Monitor and an Adaptation Actuator. The Event Monitor tracks installed components' state changes as well as probes the measured attributes across different system components. The value of a managed component's attribute can be retrieved via the getProperty(...) methods. The Adaptation Actuator implements the atomic adaptation actions that the system can take. This can include actions that manage a component's lifecycle state ― start, stop, pause, resume ― as well as properties manipulations via setProperty(...), for example, changing the computation task's priority, period... A uniform management interface simplifies the design of the actuator as the actions can be taken in a general way and can be easily reused to different component models.

The above-described key modules residing in the modelling and management layers are orchestrated so as to form an external control loop across different application domains. When a significant change has been detected, the modelling layer is notified to check whether existing constraints are being violated. Algorithm 1 describes generally the adaptation process.

| Algorithm 1: General adaptation process | |
|---|---|
| Implements : An architecture-based management system with context-specific adaptation logic | |
| Ensures : Keeps constraints satisfied in the face of changes, both functional as non-functional, through Context-specific knowledge | |
| 1. | A system change triggers adaptation process |
| 2. | Structural Modeller gets the set of satisfied components in terms of functional dependence |
| 3. | Context Selector returns Context-specific modeller's reference |
| 4. | The selected Context-specific Modeller builds an adaptation plan |
| 5. | Structure modeller merges two adaptation plans |
| 6. | The Adaptation Actuator executes the merged adaptation plan |

The numbers in the above table correspond to the numbers indicated in Fig.3.

The above-mentioned example of a set-top device with open platform support is now revisited to illustrate the effect of context-specific adaptation. When there are two applications competing for system resources, context-specific knowledge can help the architecture to automatically determine which actions should be taken according to the current context.

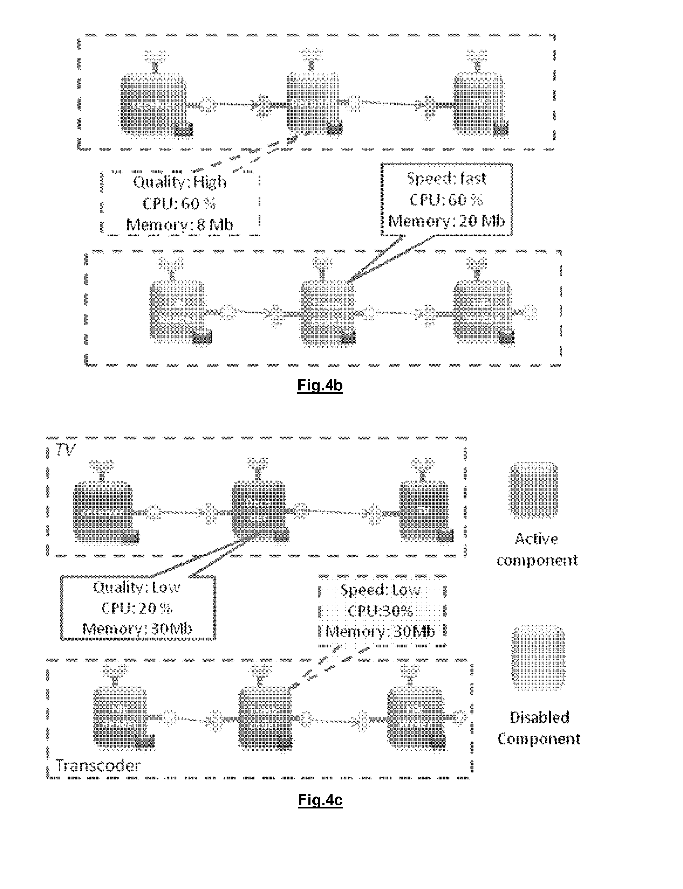

Figure 4 shows snapshots of component states if the user preferences are applied in different contexts. When the context is changed - for instance, when the user has finished watching TV (or the transcoding application has finished its task) - the architecture is able to sense the context changes and make a new round of adaptation.
In Fig.4a the user prefers watching High-definition TV. This user preference is the context knowledge. The actions taken are reserving all resource to TV applications and setting quality property of TV application as high. The transcoding component is disabled. Fig.4a shows the state after adaptation.
In Fig.4b the user prefers to get the transcoding result as soon as possible. The policy applied is to give all resources to the transcoding application. The TV application is disabled.
In Fig.4c a normal situation is represented wherein the transcoding process is in low rate. The policy now is to set the quality of the TV application low and to lower the transcoding module's compression speed.

As compared to an application based approach the invention yields the following benefits. When application based context-aware adaptation is applied, the context knowledge is integrated inside application and a different application may create a conflicting adaptation policy. In contrast, with the system according to the present invention a coherent adaptation can be achieved. Regarding the implementation complexity, the following is to be noted. As a context-specific modeler only deals with a set of one or several contexts, the complexity of implementing such implementation in the solution is much simplified as compared to "one (adaptor) for all" solution encountered in the prior art. The solution proposed by the invention further uses less system resources. Although the system may have multiple context-specific modellers in the system, at a specific time only one context-specific modeller is needed. All the other context-specific modellers can remain stored without being initialized.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Method for determining during run-time an adaptation to a software architecture comprising a plurality of components, said method comprising the steps of
- evaluating constraints for said adaptation relating to a functional dependence of components of said software architecture,
- determining during run-time a context for said software architecture taking into account information on the state of the architecture,
- selecting among a plurality of context models a context model corresponding to the determined context,
- evaluating constraints for said adaptation imposed by said selected context model,
- taking a decision on performing said adaptation based on the outcome of the evaluation steps.

2. Method for determining during run-time an adaptation as in claim 1, further comprising the step of carrying out the decided adaptation.

3. Method for determining during run-time an adaptation as in claim 1 or 2, further comprising the step of evaluating non-functional constraints for said adaptation.

4. Method as in any of claims 1 to 3; wherein said context model comprises information related to an adapted software architecture configuration.

5. Method as in any of the previous claims, comprising the step of keeping a track of said adaptation.

6. System for adapting a software architecture during run-time, said software architecture comprising a plurality of components, said system comprising
- means for evaluating constraints for an adaptation to said software architecture relating to a functional dependence of components of said software architecture,
- means for determining during run-time a context for said software architecture taking into account information on the state of the architecture and for selecting among a plurality of context models a context model corresponding to the determined context, said means further being arranged for evaluating constraints for said adaptation imposed by said selected context model,
- decision means for deciding on performing said adaptation based on information provided by said means for evaluating and said means for determining.

7. System as in claim 6, comprising a means for carrying out said modifications to said architecture during run-time.

8. System as in claim 6 or 7, comprising a means for receiving said information on the state of said architecture to be adapted.

9. System as in claim 7 or 8, comprising a management interface capable of managing components of said software architecture and arranged for communication with said means for receiving said information on the state and/or said means for carrying out said modifications.

10. System as in any of claims 6 to 9, comprising storage means for storing said constraints for said adaptation.

11. System as in any of claims 6 to 10, wherein said means for evaluating constraints relating to a functional dependence are arranged for performing a reference update of the software architecture.

12. System as in any of claims 6 to 11, wherein said means for determining comprises a first submodule arranged for determining during run-time a context for said software architecture taking into account information on the state of the architecture and for selecting among a plurality of context models a context model corresponding to the determined context and a second submodule for arranged for evaluating constraints for said adaptation imposed by said selected context model.
